# EUROPÄISCHE PATENTANMELDUNG

(11) **EP 3 910 900 A1**
(43) Veröffentlichungstag der Anmeldung: **17.11.2021**
(21) Anmeldenummer: 20174407.5
(22) Anmeldetag: 13.05.2020
(51) Int. Cl.: H04L 29/06, H04L 29/08

(54) **VERFAHREN, COMPUTERPROGRAMMPRODUKT UND COMPUTERLESBARES MEDIUM ZUM ABSICHERN EINES ÜBERMITTELNS VON DATEN ZWISCHEN MINDESTENS ZWEI GERÄTEN**

(71) Anmelder: Siemens Aktiengesellschaft, 80333 München (DE)
(72) Erfinder: Fries, Steffen, 85598 Baldham (DE); Sel, Tolga, 81379 München (DE)

(57) **Zusammenfassung**

Die Erfindung beschreibt ein Verfahren zum Absichern eines Übermittelns von Daten zwischen mindestens zwei Geräten (1), mit den Schritten:
- Bereitstellen (S1) von jeweils einem Datensatz (2) in mindestens zwei aufeinanderfolgenden Einheiten (3) eines verteilten Datenbanksystems (4) durch ein Schlüsselverteilungssystem (5), wobei der jeweils eine Datensatz (2) jeweils einen Referenzwert (r1) aufweist,
- Übermitteln (S2) von dem jeweils einem Datensatz (2) an jeweils eines der mindestens zwei Geräte (1),
- Authentifizieren (S3) der mindestens zwei Geräte (1) bei dem Schlüsselverteilungssystem (5) unter Einbezug des jeweils einen Referenzwerts (r1) des jeweils einen Datensatzes (2), wonach ein Übertragen von jeweils einem Gruppenschlüssel (6) an die mindestens zwei Geräte (1) durchgeführt wird,
- Absichern (S4) des Übermittels von Daten zwischen den mindestens zwei Geräten (1) durch den jeweils einen Gruppenschlüssel (6), an.

## Beschreibung

### HINTERGRUND DER ERFINDUNG

### Gebiet der Erfindung

Die vorliegende Erfindung betrifft ein Verfahren zum Absichern eines Übermittelns von Daten zwischen mindestens zwei Geräten, wobei Datensätze, insbesondere Referenzwerte, Gültigkeitswerte und/oder Sicherheitsparameter, zum Authentifizieren der mindestens zwei Geräte bei einem Schlüsselverteilungssystem in einem verteilten Datenbanksystem abgelegt sind.

### Beschreibung des Stands der Technik

Ein verteiltes Datenbanksystem, insbesondere eine Blockchain, ist eine kontinuierlich erweiterbare Liste von Einträgen, insbesondere Blöcken, welche mittels kryptographischer Verfahren miteinander verkettet sind. Idealerweise können Referenzwerte in einer Blockchain frei eingesehen werden und werden in einem verteilten System gehalten. Sie ermöglichen damit eine Notariatsfunktion. Smart Contracts sind Programme oder Ausführungsanweisungen, die in eine Blockchain geschrieben werden und ein Regelwerk, insbesondere Richtlinien und/oder eine Policy, definieren.

Das GDOI-Protokoll ("Group Domain of Interpretation Protocol") (IETF RFC 6407) ist ein kryptographisches Protokoll zum Management von Gruppenschlüsseln und Gruppenrichtlinien, insbesondere Sicherheitsrichtlinien. Gruppenschlüssel und die dazugehörigen Gruppenrichtlinien werden an bestimmte authentisierte Gruppenteilnehmer verteilt, die mit diesen eine Kommunikation in der Gruppe kryptographisch absichern können. Die zugrundeliegende Architektur des GDOI-protokolls besteht im Wesentlichen aus Gruppenteilnehmen und einem bzw. mehrere Key-Distribution-Center/Schlüsselverteilungssystem.

Zukünftig könnte die Maschine-zu-Maschine-Kommunikation über verteilte Datenbanksysteme, auf die Teilnehmer zugreifen können, insbesondere Blockchains, eine wichtige Rolle einnehmen. Da Daten in offenen verteilten Datenbanksystemen, insbesondere Blockchains, jedoch für alle eingesehen werden können, besteht das Problem, dass Rahmenbedingungen, wie die Teilnehmer einer Gruppe oder auch ein kryptographischer Gruppenschlüssel) für eine sichere Gruppenkommunikation nicht oder nur kompliziert bewerkstelligt werden kann.

Die Aufgabe der Erfindung besteht darin, eine Lösung für eine sichere Gruppenkommunikation bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Absichern eines Übermittelns von Daten zwischen mindestens zwei Geräten. Das Verfahren weist die folgenden Schritte auf:
- Bereitstellen von jeweils einem Datensatz in mindestens zwei aufeinanderfolgenden Einheiten eines verteilten Datenbanksystems durch ein Schlüsselverteilungssystem, wobei der jeweils eine Datensatz jeweils einen Referenzwert aufweist,
- Übermitteln von dem jeweils einem Datensatz an jeweils eines der mindestens zwei Geräte,
- Authentifizieren der mindestens zwei Geräte bei dem Schlüsselverteilungssystem unter Einbezug jeweils des einen Referenzwerts des jeweils einen Datensatzes, wonach ein Übertragen, insbesondere ein kryptographisch sicheres bzw. abgesichertes Übertragen, von jeweils einem Gruppenschlüssel an die mindestens zwei Geräte durchgeführt wird,
- Absichern des Übermittels von Daten zwischen den mindestens zwei Geräten durch den jeweils einen Gruppenschlüssel.

Ein Aspekt der Erfindung besteht darin, dass ein verteiltes Datenbanksystem, insbesondere eine Blockchain, verwendet wird, um Gruppenschlüssel sicher an Geräte, insbesondere Gruppenteilnehmer, zu verteilen, wobei die Gruppenschlüssel für ein Absichern des Übermittels von Daten, insbesondere einer Kommunikation zwischen den Geräten, verwendet werden. Hierbei wird ein Referenzwert zu den Geräten, insbesondere zur Gruppe, in dem verteilten Datenbanksystem, bevorzugt der Blockchain, von einem Schlüsselverteilungssystem, insbesondere Referenzschlüsselspeicher oder Key Distribution Center (KDC), abgelegt. Das verteilte Datenbanksystem, bevorzugt die Blockchain, erfüllt dabei eine Notariatsfunktion, das heißt die Blockchain ermöglicht eine zugängliche und glaubwürdige Speicherung von Informationen.

Die (mindestens zwei aufeinanderfolgenden) Einheiten können auch als (mindestens zwei aufeinanderfolgenden) Datenspeichereinheiten des verteilten Datenbanksystems bezeichnet werden. Eine erste Einheit speichert und/oder verweist auf Daten, eine auf die erste Einheit folgende Einheit speichert und/oder verweist auf dieselben Daten wie die erste Einheit und zusätzliche Daten. Die mindestens zwei aufeinanderfolgenden Einheiten sind miteinander verkettet. Verketten in diesem Kontext weist auf eine kryptographische Bindung zwischen beiden Blöcken hin. Die Einheiten können als Blockchain-Blöcke ausgebildet sein oder Blockchain-Blöcke umfassen.

Übermittelung von Daten zwischen den mindestens zwei Geräten beinhaltet insbesondere einen Austausch von Daten, insbesondere Informationen zwischen den mindestens zwei Geräten und kann insbesondere auch als Kommunikation zwischen den mindestens zwei Geräten und/oder als Gruppenkommunikation bezeichnet werden. Der Gruppenschlüssel ist insbesondere ein kryptographischer Schlüssel, der an die Geräte, insbesondere Gruppenteilnehmer, verteilt wird. Der Gruppenschlüssel kann insbesondere zur Entschlüsselung von Daten, welche bevorzugt für die ganze Gruppe bestimmt sind, verwendet werden. Alternativ oder auch zusätzlich kann der Gruppenschlüssel auch zur Sicherung der Integrität der Gruppenkommunikation genutzt werden. Ebenso ist es möglich den Gruppenschlüssel als Masterschlüssel zu verwenden und von ihm für verschiedenen kryptografische Dienste wie Integrität oder Vertraulichkeit weitere Schüssel abzuleiten. Diese Ableitung kann mittels bekannter Schlüsselableitungsverfahren, insbesondere HKDF (IETF RFC 5869) oder HMAC-SHA256 oder ähnlichen, durchgeführt werden.

Bestehende Einheiten (der mindestens zwei aufeinanderfolgenden Einheiten), insbesondere Blöcke, eines verteilten Datenbanksystems, bevorzugt einer Blockchain, können nicht unbemerkt gelöscht werden. Aus diesem Grund besteht der Nachteil in einer auf einem verteilten Datenbanksystem basierenden Gruppenschlüsselmanagement-Lösung darin, dass Gruppenschlüssel dauerhaft zur Verfügung stehen. Aus diesem Grund bietet ein Referenzwert, insbesondere als Zeiger (engl. Pointer), zu den Gruppenschlüsseln den Vorteil, dass nach der Gültigkeitsdauer die Gruppenschlüssel im Schlüsselverteilungssystem gelöscht werden können. Somit kann verhindert werden, dass Gruppenschlüssel in dem verteilten Datenbanksystem dauerhaft veröffentlicht sind.

Zur Authentisierung der mindestens zwei Geräte bei dem Schlüsselverteilungssystem können Zertifikate verwendet werden. Das Schlüsselverteilungssystem kann prüfen, ob der Gruppenteilnehmer autorisiert ist, den Gruppenschlüssel (adressiert durch den Referenzwert) zu laden.

Die Erfindung nutzt den Vorteil des Group-Domain-of-Interpretation-Protokolls (GDOI-Protokoll) im PULL-Modus, dass keine Firewall-Problematik (Ingress port restrictions) existiert, da Verbindungen immer vom geschützten Netz nach außen etabliert werden. Über das verteilte Datenbanksystem können Geräte, insbesondere Gruppenteilnehmer, direkt Gruppenschlüssel, insbesondere durch eine Pull-Request, laden, wodurch bei der Firewall kein Port-Forwarding durchgeführt werden muss. Hierdurch wird die IT-Sicherheit des Gesamtsystems bzgl. Zugriffen von außen nicht zusätzlich beeinflusst.

Erfindungsgemäß können die mindestens zwei Geräte Pull-Requests in dem verteilten Datenbanksystem speichern und somit das Schlüsselverteilungssystem veranlassen die Gruppenschlüssel zu aktualisieren. Das Schlüsselverteilungssystem hinterlegt hierfür in dem verteilten Datenbanksystem Referenzwerte, um die Gruppenteilnehmer zu veranlassen neue Gruppenschlüssel zu laden. Daher sehen die Gruppenteilnehmer, wenn in dem verteilten Datenbanksystem neue Einträge existieren, welche auf einen jeweiligen Gruppenteilnehmer adressiert sind. Daraufhin lädt der jeweilige Gruppenteilnehmer (PULL) die Informationen aus dem verteilten Datenbanksystem und die Gruppenschlüssel aus dem Schlüsselverteilungssystem (PULL). Einem Pull-Request folgt das Bereitstellen von jeweils einem Datensatz in mindestens zwei aufeinanderfolgenden Einheiten des verteilten Datenbanksystems durch das Schlüsselverteilungssystem. Dies setzt voraus, dass die Teilnehmer an der Kommunikation (Geräte und auch Schlüsselverteilsystem) über Änderungen im verteilten Datenbanksystem direkt informiert, insbesondere über Publish Mechanismen (Publish/Subscribe), werden.

Erfindungsgemäß können die Geräte "blacklisted" bzw. gesperrt werden, womit nach einem Update bzw. einer Aktualisierung der Gruppenschlüssel ein gesperrtes Gerät keine neuen/weiteren Gruppenschlüssel erhält. Informationen zu Geräten, die "blacklisted" bzw. gesperrt sind, können in dem verteilten Datenbanksystem veröffentlicht werden. Dennoch kann ein gesperrtes Gerät gegebenenfalls weiterhin Informationen aus dem verteilten Datenbanksystem entschlüsseln, wenn der Datensatz Gruppenschlüsselinformationen (Referenzwert r1, Gültigkeitswert t1, Sicherheitsparameter p1) enthält. Um dies zu vermeiden sollte die Schlüsselinformation nicht direkt in der verteilten Datenbank abgespeichert werden, sondern über das Schlüsselverteilsystem abfragebar sein. Dies erfordert eine entsprechende Authentisierung der Geräte am Schlüsselverteilsystem. Gesperrten Geräten kann somit der Zugriff verwehrt werden.

Geräte können in dem verteilten Datenbanksystem anonymisiert hinterlegt werden.

Erfindungsgemäß können die mindestens zwei Geräten auch als mindestens zwei Gruppenteilnehmer bezeichnet werden.

In einer Weiterbildung der Erfindung weist der jeweils eine Datensatz jeweils einen Gültigkeitswert auf.

In einer weiteren Weiterbildung der Erfindung definiert der jeweils eine Gültigkeitswert einen Zeitpunkt, zu dem:
- der jeweils eine Gruppenschlüssel gelöscht wird und/oder
- der jeweils eine Gruppenschlüssel an Gültigkeit verliert und/oder
- der jeweils eine Referenzwert an Gültigkeit verliert.

Die Gültigkeitswert gibt an, wie lange der jeweils eine Gruppenschlüssel und/oder der jeweils eine Referenzwert gültig ist und/oder existiert.

In einer weiteren Weiterbildung der Erfindung identifiziert der jeweils eine Referenzwert jeweils eines der mindestens zwei Geräte. Der jeweils eine Referenzwert kann insbesondere ein Identifierungszeichen (Kenner, Bezeichner, Erkennungsmarke) sein, insbesondere ein numerischer Wert oder ein Name oder ein öffentlicher Schlüssel des Gerätes oder ein Fingerprint des Zertifikates des Gerätes. Anhand des Referenzwerts kann ein Gerät identifiziert werden.

Erfindungsgemäß können die Referenzwerte von den Geräten genutzt werden, um bei dem Schlüsselverteilungssystem den jeweils einen Gruppenschlüssel anzufragen, insbesondere indem die Geräte sich mit dem Referenzwert bei dem Schlüsselverteilungssystem identifizieren. Der Referenzwert kann die Funktion eines Pointers, auch als Zeiger bezeichenbar, haben, um den jeweiligen Gruppenschlüssel zu laden. Mit dem Referenzwert kann daher beim Schlüsselverteilungssystem angefragt werden, ob ein Gerät den entsprechenden Gruppenschlüssel für den jeweiligen Referenzwert laden darf. Die kryptographische Identifizierung (Authentication) erfolgt mit asymmetrischer Kryptographie, insbesondere Zertifikaten.

In einer weiteren Weiterbildung der Erfindung referenziert der jeweils eine Referenzwert auf den jeweils einen Gruppenschlüssel. Der jeweils eine Gruppenschlüssel kann von dem zugehörigen Gerät zur Absicherung des Austauschs/der Übertragung von Daten zu anderen Geräten/in der Gruppe verwendet werden.

In einer weiteren Weiterbildung der Erfindung weist der jeweils eine Datensatz jeweils einen Sicherheitsparameter auf. Sicherheitsparameter, welche insbesondere weitere Informationen zu den Geräten, insbesondere Gruppenteilnehmern, enthalten, in dem verteilten Datenbanksystem gespeichert werden.

In einer weiteren Weiterbildung der Erfindung enthält der jeweils eine Sicherheitsparameter:
- Informationen zu dem jeweils einem Gruppenschlüssel und/oder
- Sicherheitsrichtlinien und/oder
- Richtlinien zu dem Austausch von Daten zwischen den genannten authentifizierten Geräten und/oder
- Richtlinien für das Authentifizieren der mindestens zwei Geräte bei dem Schlüsselverteilungssystem und/oder
- eine Referenz zu dem Schlüsselverteilungssystem und/oder
- Zugangsdaten, insbesondere eine Adresse oder ein Zertifikat des Schlüsselverteilungssystems und/oder
- Kenner (Identifierungszeichen, Kenner, Bezeichner, Erkennungsmarke) der mindestens zwei Geräte.

Die Sicherheitsparameter können sowohl Informationen zum eigentlichen Gruppenschlüssel enthalten aber auch weitere Parameter zu den (Sicherheits-)Richtlinien. Insbesondere können sie eine Referenz, insbesondere in Form eines Pointers, auch als Zeiger bezeichenbar, auf das Schlüsselverteilungssystem enthalten.

Erfindungsgemäß können die Sicherheitsparameter sein:
- Security Assoziationen (Security Associations, SA), insbesondere an ISAKMP (RFC 2408) orientiert,
- Securiy Policies (SP), insbesondere an ISAKMP (RFC 2408) orientiert,
- Erforderliche Art der Authentisierung der Geräte, insbesondere Gruppenteilnehmer (PSK, zertifikatsbasiert, OTP, ...),
- Schlüsselparameter, insbesondere in Form von Zeitinformationen zur Gültigkeitsbestimmung der Gruppenschlüssel und/oder Übergangszeiten von einem Gruppenschlüssel zu einem nächsten Gruppenschlüssel,
- Zeiger auf Adressaten (Referenzwerte der Adressaten) der Sicherheitsparameter von Gruppenschlüsseln,
- Tokens/Zertifikate für Authentisierungsmechanismen (z.B. Kerberos, OAuth, x509, etc.) für den Zugang zu dem Schlüsselverteilungssystem, insbesondere Referenzschlüsselspeicher oder Key Distribution Center (KDC),
- Werte, um den Key Distribution Center (KDC) zu bestimmen,
- Werte, um die jeweiligen Gruppenteilnehmer zu bestimmen

Erfindungsgemäß können die Sicherheitsparameter von den Geräten genutzt werden, um bei dem Schlüsselverteilungssystem den jeweils einen Gruppenschlüssel anzufragen.

Erfindungsgemäß können die Sicherheitsparameter falls diese als reine Pointer bzw. Zeiger ausgebildet sind, von den Geräten genutzt werden, um bei dem Schlüsselverteilungssystem konkrete Sicherheitsinformationen anzufragen.

In einer weiteren Weiterbildung der Erfindung weist der jeweils eine Datensatz eine kryptographische Signatur und/oder eine kryptographische Verschlüsselung auf. Das hat den Vorteil das der jeweils eine Datensatz vor Datenangriffen und Zugriffen von Unberechtigten geschützt ist und/oder authentisch ist.

In einer weiteren Weiterbildung der Erfindung wird das Übermitteln des jeweils einen Datensatzes an jeweils eines der mindestens zwei Geräte:
- in periodischen/zyklischen Abständen durchgeführt und/oder
- durch eine Aktivierungseinheit gesteuert.
Das hat den Vorteil, dass das Übermitteln des jeweils einen Datensatzes an jeweils eines der mindestens zwei Geräte von den Geräten aus gesteuert und von einer externen Aktivierungseinheit gesteuert werden kann.

Die mindestens zwei Geräte können selbst, insbesondere periodisch und/oder zu definierten Zeitpunkten, aktiv werden und in dem verteilten Datenbanksystem nach für sich bestimmten Datensätzen, insbesondere Gruppeninformationen, suchen. Alternativ triggert die Aktivierungseinheit, insbesondere ein "Aktivierer", die Geräte, dass neue Datensätzen, insbesondere Gruppeninformationen, in dem verteilten Datenbanksystem zur Verfügung stehen.

In einer weiteren Weiterbildung der Erfindung wird das Übertragen des jeweils einem Gruppenschlüssels an die mindestens zwei Geräte über eine authentisierte und/oder kryptographisch geschützte Verbindung durchgeführt. Das hat den Vorteil, dass der jeweils eine Gruppenschlüssel vor Datenangriffen geschützt ist und/oder authentisch ist.

Die Gruppenschlüssel sollten durch eine authentisierte und vertrauliche Verbindung, insbesondere Kommunikationskanal, geladen werden. Hier kann insbesondere IKE (Internet Key Exchange) in RFC2409 wie in GDOI (IETF RFC 6407) verwendet werden. Alternativ kann auch IKEv2 (IETF RFC 7269) verwendet werden.

In einer weiteren Weiterbildung der Erfindung wird das Übertragen des jeweils einem Gruppenschlüssels an die mindestens zwei Geräte durch ein Speichern einer Bestätigungsinformation in dem verteilten Datenbanksystem bestätigt.

Die Bestätigungsinformation bestätigt, dass der Gruppenschlüssel erfolgreich an das Gerät übertragen und von dem Gerät geladen worden ist. Die Bestätigungsinformation wird in einer weiteren, insbesondere nachfolgenden, Einheit des verteilten Datenbanksystems abgelegt/gespeichert.

In einer weiteren Weiterbildung der Erfindung wird das Übertragen des jeweils einen Gruppenschlüssels an die mindestens zwei Geräte aus dem Schlüsselverteilungssystem oder aus dem verteilten Datenbanksystem durchgeführt. Das bedeutet, dass der jeweils eine Gruppenschlüssel in dem Schlüsselverteilungssystem oder dem verteilten Datenbanksystem gespeichert sein kann.

Optional kann der Gruppenschlüssel, insbesondere in verschlüsselter Form, in dem verteilten Datenbanksystem gespeichert werden, insbesondere verschlüsselt mit dem öffentlichen Schlüssel von jeweils einem der Geräte, insbesondere von einem der Gruppenteilnehmer. Dass der Referenzwert auf den Gruppenschlüssel in dem Schlüsselverteilungssystem zeigt, würde in dieser Variante entfallen, da der Gruppenschlüssel direkt in dem verteilten Datenbanksystem gespeichert ist und in diesem Fall auf den jeweiligen Gruppenteilnehmer zeigt.

In einer weiteren Weiterbildung der Erfindung ist das verteilte Datenbanksystem eine Blockchain.

In einer weiteren Weiterbildung der Erfindung sind die mindestens zwei aufeinanderfolgenden Einheiten jeweils als ein Blockchain-Block ausgebildet oder umfassen jeweils einen Blockchain-Block.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte des erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte des erfindungsgemäßen Verfahrens ausgeführt werden, wenn das Computerprogramm auf der Recheneinheit ausgeführt wird.

Diese Erfindung ermöglicht eine Verteilung von Gruppenschlüsseln basierend auf einem verteilten Datenbanksystem, insbesondere einer Blockchain. Mögliche Anwendungsszenarien in der Gebäudetechnik sind IoT Geräte, Hausautomatisierungen, Bilderkennung auf FPGAs und intelligente Gebäudesteuerung. Mögliche Anwendungsszenarien in der Prozessindustrie und dem Energiemanagement sind Digital Factory Anwendungen, Industriekomponenten, Edge Cloud, Gateways, Steuerungen, Automatisierungstechnik und FPGA basierte Antriebstechnik. Mögliche Anwendungsszenarien in dem Infrastruktur- und Mobilitätsbereich sind Signal- und Leittechnik im schienengebundenen Personen- und Güterverkehr, Elektrifizierungslösungen für den Bahn- und Straßenverkehr, Straßenverkehrssteuerungs- und Informationssysteme, Parkraum-Management sowie elektronische Bezahl- und Mautsysteme für den Stadtverkehr und Fernverkehr

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Ablaufdiagramm eines Verfahrens zum Absichern eines Übermittelns von Daten zwischen mindestens zwei Geräten und
- Fig. 2: zeigt eine schematische Darstellung zum Verteilen von Gruppenschlüsseln.

### DETAILLIERTE BESCHREIBUNG DER ERFINDUNG

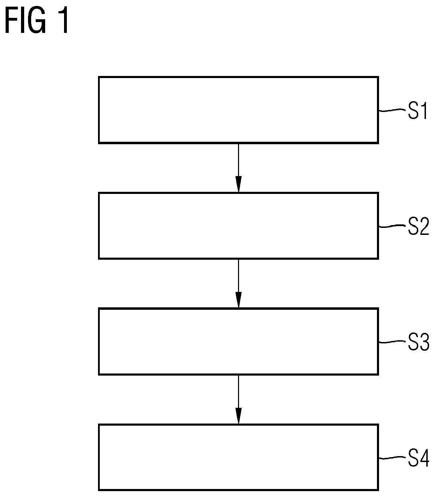

Fig. 1 zeigt ein Ablaufdiagramm eines Verfahrens zum Absichern eines Übermittelns von Daten zwischen mindestens zwei Geräten. Das Verfahren weist die folgenden Schritte auf:
- Schritt S1: Bereitstellen von jeweils einem Datensatz in mindestens zwei aufeinanderfolgenden Einheiten eines verteilten Datenbanksystems durch ein Schlüsselverteilungssystem, wobei der jeweils eine Datensatz jeweils einen Referenzwert aufweist,
- Schritt S2: Übermitteln von dem jeweils einem Datensatz an jeweils eines der mindestens zwei Geräte,
- Schritt S3: Authentifizieren der mindestens zwei Geräte bei dem Schlüsselverteilungssystem unter Einbezug des jeweils einen Referenzwerts des jeweils einen Datensatzes, wonach ein Übertragen von jeweils einem Gruppenschlüssel an die mindestens zwei Geräte durchgeführt wird,
- Schritt S4: Absichern des Übermittels von Daten zwischen den mindestens zwei Geräten durch den jeweils einen Gruppenschlüssel.

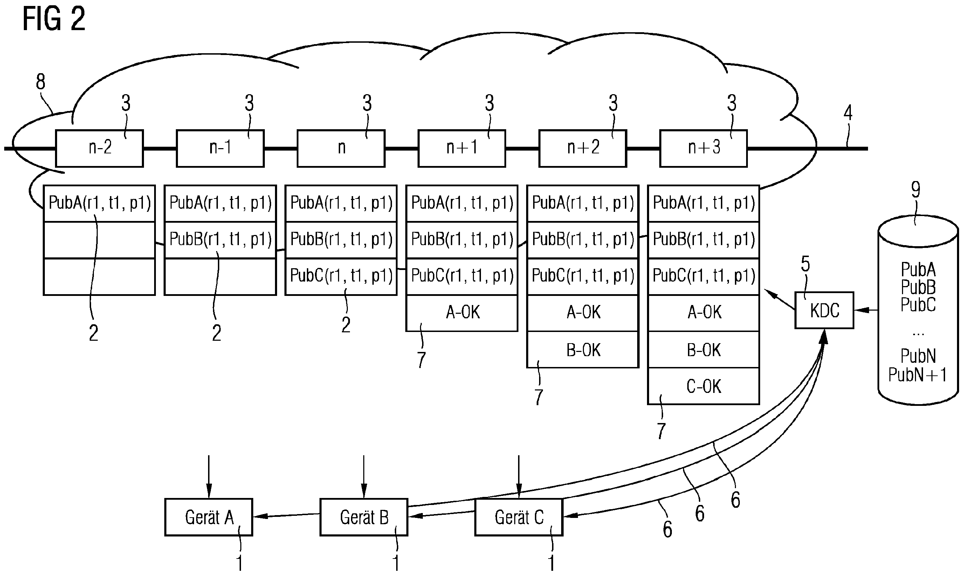

Fig. 2 zeigt eine schematische Darstellung zum Verteilen von Gruppenschlüsseln 6. Ein verteiltes Datenbanksystem 4 ist in einer Cloud-Umgebung 8 ausgebildet. Das verteilte Datenbanksystem 4 weist mehrere, in Fig. 2 dargestellt sind sechs, aufeinanderfolgende Einheiten 3, auch als Blöcke bezeichenbar, auf. In die Einheiten werden von einem Schlüsselverteilungssystem 5, insbesondere Referenzschlüsselspeicher oder Key Distribution Center (KDC), Datensätze 2 gelegt. Die Datensätze 2 weisen jeweils einen Referenzwert r1, einen Gültigkeitswert t1 und einen Sicherheitsparameter p1 auf.

Die Referenzwerte r1 und/oder Sicherheitsparameter p1 können Informationen aufweisen, welche einzelne Geräte 1 identifizieren. Die Geräte 1 entsprechen Gruppenteilnehmern. In Fig. 1 sind drei Geräte 1, das Gerät A, Gerät B und Gerät C, dargestellt. Jedes Gerät 1 wird durch einen Referenzwerte r1 einer anderen Einheit 3 bzw. einem anderen Block identifiziert.

Die Datensätze 2 und deren Referenzwerte r1, Gültigkeitswerte t1 und Sicherheitsparameter p1 sind mit einem kryptographischen Verfahren verschlüsselt (z.B. PubA als Public-Key von Gerät A, PubB als Public-Key von Gerät B, PubC als Public-Key von Gerät C, PubN als Public-Key von Gerät N, PubN+1 als Public-Key von Gerät N+1) und/oder integritätsgeschützt. Kryptographischen Verfahren können in der Verschlüsselungseinheit 9 durchgeführt werden und/oder Schlüssel zur Verschlüsselung der Datensätze 2 und deren Referenzwerte r1, Gültigkeitswerte t1 und Sicherheitsparameter p1 dort erstellt werden. Die Verschlüsselung kann dabei mittels asymmetrischer Algorithmen wie RSA unter Nutzung des öffentlichen Schlüssels eines entsprechenden X.509 Zertifikates erfolgen. Eine weitere Variante stellen ElGamal Verfahren dar, bei denen der öffentlichen Schlüssel im Kontext der Nutzung von ECDSA basierten X.509 Zertifikaten genutzt werden kann.

Alternativ und/oder zusätzlich können die Informationen r1, t1 und p1 auch unsigniert in die Blockchain geladen werden. Die Gruppenteilnehmer 1 können die Authentizität dieser Informationen durch die TransaktionsID bzw. Blockchainidentifier. Im Falle der klassischen Blockchain ist das der Private Key und/oder der Public Key, welcher im Blockchain Wallet gespeichert ist. Der Referenzwert r1 kann zusätzlich Informationen beinhalten, um den Gruppenteilnehmer 1 zu identifizieren. Diese Identifizierungsinformation kann anonym oder öffentlich sein.

In einem ersten Schritt speichert das Schlüsselverteilungssystem 5 einen Datensatz 2 mit Referenzwert r1 zu einem Gruppenschlüssel 6, einem Gültigkeitswert t1 und einem Sicherheitsparameter p1 (insbesondere zusätzliche Informationen bzw. Gruppenschlüsselinformationen) in der mit n-2 gekennzeichnet Einheit 3 des verteilten Datenbanksystems 4, insbesondere der Blockchain, für das Gerät 1, welches mit Gerät A gekennzeichnet ist, ab.

Anschließend speichert das Schlüsselverteilungssystem 5, insbesondere Referenzschlüsselspeicher oder Key Distribution Center (KDC), einen weiteren Datensatz 2 mit einem weiteren Referenzwert r1 zu einem weiteren Gruppenschlüssel 6, einem weiteren Gültigkeitswert t1 und einem weiteren Sicherheitsparameter p1 (insbesondere zusätzliche Informationen bzw. Gruppenschlüsselinformationen) in der mit n-1 gekennzeichnet Einheit 3 des verteilten Datenbanksystems 4, insbesondere der Blockchain, für das Gerät 1, welches mit Gerät B gekennzeichnet ist, ab.

Anschließend speichert das Schlüsselverteilungssystem 5, insbesondere Referenzschlüsselspeicher oder Key Distribution Center (KDC), einen weiteren Datensatz 2 mit einem weiteren Referenzwert r1 zu einem weiteren Gruppenschlüssel 6, einem weiteren Gültigkeitswert t1 und einem weiteren Sicherheitsparameter p1 (insbesondere zusätzliche Informationen bzw. Gruppenschlüsselinformationen) in der mit n gekennzeichnet Einheit 3 des verteilten Datenbanksystems 4 für das Gerät 1, welches mit Gerät C gekennzeichnet ist, ab.

Alternativ und/oder zusätzlich können die Schritte n-2, n-1 und n auch gleichzeitig durchgeführt und in einen Block 3 (z.B. nur n-2) gespeichert werden.

Nachdem alle Datensätze 2 mit den Gruppenschlüsselinformationen in dem verteilten Datenbanksystem 4 abgespeichert wurden, werden die Geräte 1 aktiv. Es folgt ein Übermitteln von dem jeweils einem Datensatz 2 an die Geräte 1 durch das KDC wie folgt. Die Geräte 1 laden die Datensätze 2 (PULL).

Alternativ und/oder zusätzlich existieren in der Blockchain-Technologie sogenannte Oracles. Diese Oracles analysieren die Blockchain als Service und informieren Blockchain-Teilnehmer (Gerät 1), dass eine neue Information in der Blockchain geladen worden ist. Das Gerät 1 muss somit die Blockchain nicht aktiv monitoren und kann durch sogenannte Oracles aktiviert werden.

Mit Hilfe der Referenzparameter r1 wird bei dem Schlüsselverteilungssystem 5, insbesondere Referenzschlüsselspeicher oder Key Distribution Center (KDC), eine Authentisierung durchgeführt. Anschließend wird ein Übertragen von jeweils einem Gruppenschlüssel 6 an die Geräte 1 durchgeführt. Von jedem der Geräte 1 ein Gruppenschlüssel 6 geladen.

Der Gruppenschlüssel 6 sollte durch einen authentisieren und vertraulichen Kommunikationskanal geladen, insbesondere zwischen den Geräten 1 und dem Schlüsselverteilungssystem 5, werden. Die Sicherheitsparameter p1 und/oder die Referenzparameter r1 können auch für das Laden der Gruppenschlüssel 6 verwendet werden. Die Geräte 1 können selbst, insbesondere periodisch und/oder zu definierbaren Zeitpunkten, aktiv werden und in dem verteilten Datenbanksystem 4, insbesondere der Blockchain, nach für sich bestimmten Datensätzen 3 mit Gruppeninformationen suchen (z.B r1, p1 und/oder Pub(r1,1,t1)). Alternativ macht ein "Aktivierer" (Oracle) die Geräte 1 aufmerksam, dass neue Datensätzen 3 mit Gruppeninformationen zur Verfügung stehen. Die Gruppenschlüssel 6 können in dem Schlüsselverteilungssystem 9 oder dem verteilten Datenbanksystem 4 gespeichert sein und von dort an die Geräte 1 übertragen werden.

Die Geräte können durch eine Bestätigungsinformation 7 bestätigen, dass sie den Gruppenschlüssel 6 erhalten haben und dieser erfolgreich übertragen bzw. geladen wurde. Die Bestätigungsinformation 6 wird in einer weiteren, insbesondere nachfolgenden, Einheit 3 des verteilten Datenbanksystems 4, insbesondere der Blockchain, abgelegt/gespeichert. Das Gerät 1, welches als Gerät A gekennzeichnet ist, speichert die Bestätigungsinformation 7 A-OK in die Einheit 3, welche mit n + 1 gekennzeichnet ist, des verteilten Datenbanksystem 4, insbesondere der Blockchain, ab. Das Gerät 1, welches als Gerät B gekennzeichnet ist, speichert die Bestätigungsinformation 7 B-OK in die Einheit 3, welche mit n + 2 gekennzeichnet ist, des verteilten Datenbanksystem 4, insbesondere der Blockchain, ab. Das Gerät 1, welches als Gerät C gekennzeichnet ist, speichert die Bestätigungsinformation 7 C-OK in die Einheit 3, welche mit n + 2 gekennzeichnet ist, des verteilten Datenbanksystem 4, insbesondere der Blockchain, ab.

Anschließend kann eine Kommunikation, ein Austausch von Daten und/oder eine Übertragung von Daten zwischen den Geräten unter Absicherung durch die Gruppenschlüssel 6 erfolgen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Gerät
- 2: Datensatz
- 3: Einheit
- 4: verteiltes Datenbanksystem
- 5: Schlüsselverteilungssystem
- 6: Gruppenschlüssel
- 7: Bestätigungsinformation
- 8: Cloud-Umgebung
- 9: Verschlüsselungseinheit

- Si: Schritt i, i = [1, 4]
- r1: Referenzwert
- t1: Gültigkeitswert
- p1: Sicherheitsparameter

## Patentansprüche

1. Verfahren zum Absichern eines Übermittelns von Daten zwischen mindestens zwei Geräten (1), mit den Schritten:
- Bereitstellen (S1) von jeweils einem Datensatz (2) in mindestens zwei aufeinanderfolgenden Einheiten (3) eines verteilten Datenbanksystems (4) durch ein Schlüsselverteilungssystem (5), wobei der jeweils eine Datensatz (2) jeweils einen Referenzwert (r1) aufweist,
- Übermitteln (S2) von dem jeweils einem Datensatz (2) an jeweils eines der mindestens zwei Geräte (1),
- Authentifizieren (S3) der mindestens zwei Geräte (1) bei dem Schlüsselverteilungssystem (5) unter Einbezug des jeweils einen Referenzwerts (r1) des jeweils einen Datensatzes (2), wonach ein Übertragen von jeweils einem Gruppenschlüssel (6) an die mindestens zwei Geräte (1) durchgeführt wird,
- Absichern (S4) des Übermittels von Daten zwischen den mindestens zwei Geräten (1) durch den jeweils einen Gruppenschlüssel (6).

2. Verfahren nach Anspruch 1,
wobei der jeweils eine Datensatz (2) jeweils einen Gültigkeitswert (t1) aufweist.

3. Verfahren nach Anspruch 2,
wobei der jeweils eine Gültigkeitswert (t1) einen Zeitpunkt definiert, zu dem:
- der jeweils eine Gruppenschlüssel (6) gelöscht wird und/oder
- der jeweils eine Gruppenschlüssel (6) an Gültigkeit verliert und/oder
- der jeweils eine Referenzwert (r1) an Gültigkeit verliert.

4. Verfahren nach einem der vorhergehenden Ansprüche,
wobei der jeweils eine Referenzwert (r1):
- jeweils eines der mindestens zwei Geräte (1) identifiziert und/oder
- auf den jeweils einen Gruppenschlüssel (6) referenziert.

5. Verfahren nach einem der vorhergehenden Ansprüche,
wobei der jeweils eine Datensatz (2) jeweils einen Sicherheitsparameter (p1) aufweist.

6. Verfahren nach Anspruch 5,
wobei der jeweils eine Sicherheitsparameter (p1):
- Informationen zu dem jeweils einem Gruppenschlüssel (6) und/oder
- Sicherheitsrichtlinen und/oder
- Richtlinien für das Übermitteln von Daten zwischen den mindestens zwei Geräten (1) und/oder
- Richtlinien für das Authentifizieren der mindestens zwei Geräte (1) bei dem Schlüsselverteilungssystem (5) und/oder
- eine Referenz zu dem Schlüsselverteilungssystem (5) und/oder
- Zugangsdaten zu dem Schlüsselverteilungssystem (5) und/oder
- Kenner der mindestens zwei Geräte (1)
enthält.

7. Verfahren nach einem der vorhergehenden Ansprüche,
wobei der jeweils eine Datensatz (2) eine kryptographische Signatur und/oder eine kryptographische Verschlüsselung aufweist.

8. Verfahren nach einem der vorhergehenden Ansprüche,
wobei das Übermitteln des jeweils einen Datensatzes (2) an jeweils eines der mindestens zwei Geräte (1):
- in periodischen Abständen durchgeführt wird und/oder
- durch eine Aktivierungseinheit gesteuert wird.

9. Verfahren nach einem der vorhergehenden Ansprüche,
wobei das Übertragen des jeweils einem Gruppenschlüssels (6) an die mindestens zwei Geräte (1) über eine authentisierte und/oder kryptographisch geschützte Verbindung durchgeführt wird.

10. Verfahren nach einem der vorhergehenden Ansprüche,
wobei das Übertragen des jeweils einem Gruppenschlüssels (6) an die mindestens zwei Geräte (1) durch ein Speichern einer Bestätigungsinformation (7) in dem verteilten Datenbanksystem (4) bestätigt wird.

11. Verfahren nach einem der vorhergehenden Ansprüche,
wobei das Übertragen des jeweils einem Gruppenschlüssels (6) an die mindestens zwei Geräte (1) aus dem Schlüsselverteilungssystem (5) oder aus dem verteilten Datenbanksystem (4) durchgeführt wird.

12. Verfahren nach einem der vorhergehenden Ansprüche,
wobei das verteilte Datenbanksystem (4) eine Blockchain ist.

13. Verfahren nach Anspruch 12,
wobei die mindestens zwei aufeinanderfolgenden Einheiten (3) jeweils einen Blockchain-Block umfassen.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
